(19) Europäisches Patentamt
European Patent Office
Office européen des brevets

(11) Publication number: **0 140 578 A1**

# (12) EUROPEAN PATENT APPLICATION

(21) Application number: **84306534.3**

(22) Date of filing: **26.09.84**

(51) Int. Cl.⁴: **G 02 F 1/21**, G 02 F 1/01

(30) Priority: **26.09.83 GB 8325720**

(43) Date of publication of application: **08.05.85 Bulletin 85/19**

(84) Designated Contracting States: **AT BE CH DE FR IT LI LU NL SE**

(71) Applicant: **PLESSEY OVERSEAS LIMITED, Vicarage Lane, Ilford Essex IGI 4AQ (GB)**

(72) Inventor: **Stewart, William James, The Manor House High Street, Blakesley Northants NN12 8RE (GB)**

(74) Representative: **Field, Howard John, The Plessey Company plc Beeston, Nottingham, NG9 1LA (GB)**

(54) **Light modulator comprising an optical resonator.**

(57) To provide enhanced modulation of an optical signal a Fabry-Perot resonator comprising a waveguide (31) and a plurality of mirrors (32, 33) is modified by the inclusion of a plurality of modulating electrodes (34, 35) to which a modulation voltage signal may be applied. Thus resonance intensified optical signals may be modulated by electro-optic effects. Other embodiments include modulators having a plurality of modulating electrode pairs to take advantage of higher orders of resonance of the Fabry-Perot cavity and single side bend modulators utilising birefringence effects to cross couple differently polarised optical signals. One way transmission and isolator functions may also be provided.

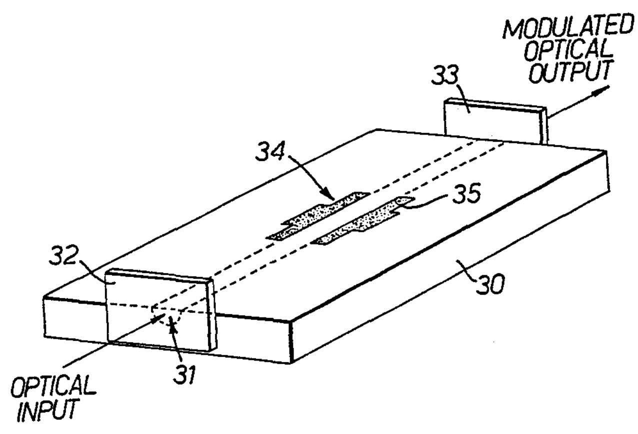


EP 0 140 578 A1

IMPROVEMENTS IN OR RELATING TO MODULATORS

The present invention relates to modulators and more particularly to such modulators of the kind known as electro-optic modulators in which an optical signal passing through an optical fibre is modulated by application of a voltage to electrodes situated close to the fibre.

It is an object of the present invention to provide electro-optic modulators in which the modulation of the optical signal is enhanced in comparison with previously known techniques.

According to the present invention there is provided an electro-optic modulator comprising an optical resonator and electrically responsive modulating means arranged to provide an electric or magnetic field across an optical transmission path of said optical resonator in response to an applied modulating signal such that in use an input optical signal is intensified and modulated simultaneously.

It is here noted that modulation of an input signal is by magneto-optic or electro-optic effects.

Preferably said modulating means comprises a plurality of electrodes transverse and adjacent to said transmission path such that the optical signal is modulated in response to an input electrical voltage signal.

Said resonator may be a Fabry-Perot resonator comprising a pair of semi-transparent mirrors and a substrate enclosing a resonant cavity, and said electrodes are positioned either side of said resonant cavity.

A further semi-transparent mirror may be provided, said further mirror providing a second independant resonant cavity in the substrate while second cavity may have a further pair of modulation electrodes .

A plurality of pairs o modulator electrodes may be provided intermediate a pair of mirrors to effect modulation of higher orders of resonance of the resonant cavity. The modulator may be provided with electro-optic couplding such that a plurality of differently polarised signals may be coupled to provide a single sideband modulated output.

In one embodiment the modulator comprises a loop resonator and the modulating means is an electrically conducting loop which encircles the optical path, in use, the electrically conducting loop acting as a current loop.

Electro-optic modulators in accordance with the invention will now be described by way of example only with reference to the accompanying drawings in which:-

Figure 1 is a schematic representation of an electro-optic ring modulator;

Figure 2 is a schematic representation of an Fabry-Perot resonator;

Figure 3 shows a transmission response/optical wavelength characteristic of an electro-optic modulator in accorance with the invention;

Figure 4 to 8 are respective schematic representations of various electro-optic modulators in accordance with the invention;

Figure 9 shows a frequency response characteristic for the modulator of Figure 7;

Figures 10a and b are schematic representations of another electro-optic modulator in accordance with the invention;

Figures 11a and b show frequency response characteristics which illustrate the operation of the modulators of Figure 10; and

Figure 12 is a cutaway view illustrating the construction of one of the electro-optic modulators of Figures 4 to 7.

Referring first to Figure 1 in the ring modulators of known kind an optical carrier signal is transmitted through an opticl fibre 10. A ring resonator, also of known kind, has a pair of plates 12, 14 to which a potential difference V-, V+ is applied to modulate the intensified signal. "Loose" coupling between the ring resonator 16 and the optical fibre 10 thereby effects modulation of the transmitted signal.

In Figure 2 to which reference is now made in the Fabry-Perot resonator, an optical signal travelling in an optical path 20 is caused to resonate between mirrors 22, 24 and is thereby intensified. It is here noted that the optical path 20 within the confines of the Fabry-Perot resonator may be a waveguide or an optical fibre path for example.

By introducing a pair of plate electrodes to the device of Figure 1 the resonant optical signal on the path 20 may also be modulated by electro-optic effects. Such a device is discussed hereinafter with reference to Figure 5.

This invention also discloses more complex devices which enhance the function of the basic modulators above. For example, the addition of a second passive resonator to the basic modulators provides a single sideband modulation system sometimes referred to as a frequency shifting system.

The use of two resonators with modulated coupling will also enhance the modulation function and the use of two independantly modulated resonators can provide one-way transmission and isolation functions.

The invention also provides for the use of higher resonant frequencies in the modulator as hereinafter discussed.

Referring to Figure 12 the modulator comprises a substrate 30 which includes a Fabry-Perot resonator having a waveguide 31 and a pair of mirrors 32, 33. To the basic Fabry-Perot resonator a pair of electrodes 34, 35 have been added to which a modulating electrical voltage signal may be applied. Thus an optical signal applied at the input leaves the device as a modulated optical output. It is here noted that the pair of electrodes 34, 35 lie one on either side of the cavity of the Fabry-Perot resonator. It will be appreciated that the location of the electrodes 34, 35 within the confines of the substrate 30 is to provide an electric field across the cavity of the resonator. Thus the electrodes may be located on the edge nearest the waveguide 31 or further away than actually shown in the Figure.

To consider the properties of the device of Figure 12 it is neccessary to define various parameters for which the term 'n' defines the refractive index of the substrate 30, 'R' the mirror reflectivity and 'L' the length of the waveguide 31 between the mirrors 32, 33.

Now assuming 'c' to be the velocity of light and 'w' to be the optical frequency of an applied input signal and, for a first analysis, ignoring the effects of the length of the electrodes 34, 35 then a normalised optical frequency $\sigma$ may be defined as

$$\sigma = \frac{2Lnw}{c}$$

Ignoring losses, the unmodulated transmission of the device is given by,

$$\text{Transmission} = (1+F\ \text{Sin}^2 \frac{\sigma}{2})^{-1} \text{ where } F \equiv \frac{4R}{(1-R)^2}$$

The gain for small signal low frequency phase modulation compared with a mirrorless structure is given by,

$$\frac{2R\ (\text{Cos}\ \sigma - R)}{(1+R^2-2R\ \text{Cos}\ \sigma)} + 1$$

In an intensity modulator, no modulation is produced if the mirrors are removed. An intensity modulator is therefore considered with reference to the structure shown in Figure 13 the function of which will be apparent.

In this case the gain is given by

$$\frac{F\ \text{Sin}\ \sigma}{(1+F\ \text{Sin}^2 \frac{\sigma}{2})^2}$$

Dependence upon the optical frequency $\sigma$ has been

ignored for the comparison structure.

These dependencies are shown in Figure 14 giving optimum (as a function of $\sigma$ ) gains as a function of mirror reflectivity R and in Figure 15 for a mirror reflectivity of 0.8. It will be noted that the intensity modulator produces a null and a phase reversal in the region of $\sigma = 0$. The curves otherwise follow the Fabry-Perot transmission curve also shown.

The results shown are appropriate only to modulating signals, the frequency of which is low and which produce an insignificant shift in $\sigma$ in the sidebands. If this is not so the response is more complex and for small modulation depth is analysed as:-

$$\frac{\text{Output Amplitude}}{\text{Input Amplitude}} = \underbrace{\frac{e^{i\sigma}}{1-Re^{i\sigma}}}_{(1)} \left\{ \underbrace{1-e^{iw_2 t}}_{(2)} \cdot \underbrace{\frac{1}{(1-R)}}_{(3)} \cdot \underbrace{\Delta}_{(4)} \cdot \underbrace{e^{i\left\{\frac{\pi}{2} - \frac{2Ln}{c}(w_2 - w_1)\right\}}}_{(5)}\right.$$

$$\left. \times \left\{ \underbrace{\frac{e^{\frac{i2Ln}{c}(w_2 - w_1)}}{1 - R\, e^{\frac{i2Ln}{c}(w_2 - w_1)}}}_{(6)} \right\}\right\}$$

in which $w_1$ is the optical frequency

$w_2$ is the modulating frequency

The terms may be described as:

(1) The CW (unmodulated) device transmission at $w_1$($\sigma \equiv \frac{2Lnw_1}{c}$

(2)- (6) The modulation term

(2) The drive frequency modulation $w_2$

(3) The gain term = $(1-R)^{-1}$

(4) The applied modulation depth $\Delta$

(5) A non-time dependent term that determines the nature (ie phase/amplitude) of the modulation

(6) The CW device transmission on the sidebands from the modulation at $(w_2-w_1)$

Terms (2)- (6) are then duplicated at $-(w_2+w_1)$.

The presence of this last term makes it clear that the modulation gain will decline as the sidebands move down the transmission curve (Figure 15) away from an $w_1$ @ $\sigma = 0$; but that the gain will be recovered as the sidebands at $(w_2-w_1)$ approach other Fabry-Perot resonances, as previously mentioned.

Although the foregoing analysis applies only to the structure of Figure 12 similar behaviour will be exhibited by devices using resonators of other kinds, in particular with mirrors integrated onto the substrate, a ring resonator or a resonator formed by applying a continuous grating along the length, L, of the waveguide.

It will be noted that in a device such as that shown in Figure 12 in which the substrate 30 is birefringent and in which 'n' is dependant upon input polarization the applied modulation couples (at least weakly) the two polarizations. Since effectively the device contains two cavities with slightly different resonances, application of a derived frequency $\Omega$ (see Figure 16) should then cause some light input on one polarization at its resonance wl to be output on the other polarization at a frequency of (wl +$\Omega$). However, since very little, if any, resonance will exist at (wl -$\Omega$) a single sideband modulator with polarization separated outputs is obtained.

The device of Figure 12 is shown schematically in Figure 5 in which similar designations of the component parts are used.

Referring now to Figure 4 as has been mentioned above, two independantly modulated resonators produce non reciprocal functions, that is one-way transmission only. Thus in the device of Figure 4 two sets of modulating plates 26, 27 and 28, 29 are provided in respective Fabry-Perot resonant cavities.

Returning now to Figures 1 and 2 and referring also to Figure 3 as the modulation applied to these devices increases, the optical frequency shift so induced takes the resonators off-resonance thus reducing the efficiency of the devices. This corresponds to shifting down the resonance in a passive resonator as shown at output 1 of Figure 3.

This response will however recover if the applied frequency is equal to the resonator resonance spacing such that both modulations produce sidebands that are also on resonance or if the electrodes are suitably configured as shown in Figures 5, 6 and 7. In this respect the device of Figure 5 is used for first resonance only, Figure 6 for 2nd resonance and Figure 7 for 3rd resonance.

The devices so formed give a very fast response of limited bandwidth which is useful in application such as frequency multiplexed telecommunication optical fibres.

With reference now to Figure 8 instead of a resonator a single pass coil of optical waveguide 30 is used, - either a fibre or a coil formed on a substrate. The resonance now occurs at the frequency corresponding to the time for the light to make one circuit of the coil 30. The properties are otherwise similar to those of the resonant type except that the electro-optic driver is replaced by two drivers 32, 34 with $90^{o}$ shift to give some isolation formation. It will be appreciated that the drivers 32, 34 act, in use, as current loops and in this case modulation is effected by magneto-optic effects.

If the device is an optical fibre then an existing (known) device balances the periodic variation in sensitivity due to the fibres birefringence with the periodicity of the winding (in the known case to produce a Faraday isolator). An error between these two periods will produce a shift in the frequency response (Figure 9b), degrading the D.C. performance but improving it at another frequency as shown in Figures 9a and 9b.

With reference now to Figures 10a and 10b an electro-optic modulator comprises first and second mirrors 40, 42 and plate electrodes 44, 46. If light beams of different polarisation E1 and E2 are considered then the cavity formed by the two mirrors will be effectively of two different lengths L1, L2 for the two different polarised beams as shown in Figure 10b at A and B.

With reference now to Figures 11a and 11b the cavity will form resonances at different frequencies for the two polarisations E1, E2 due to the two lengths L1, L2 as shown in Figure 10b.

An applied voltage across plate electrodes 44, 46 will cause coupling of A and B and therefore by applying a high frequency voltage at a frequency $w_1 - w_2$ (see Figure 11a) modulated coupldling preferably weak is produced.

Thus the device produces the following output from the input:-

INPUT :- $\updownarrow$ @ $w_1$

OUTPUT:- $\updownarrow$ @ $w_1$ + $\leftrightarrow$ @ $w_2$

Small outputs at other frequencies may be formed.

CLAIMS:-

1. An electro-optic modulator comprising an optical resonator characterised in that electrically responsive modulating means (34, 35) is arranged to provide an electric or magnetic field across an optical transmission path (31) of said optical resonator in response to an applied modulating signal such that in use an input optical signal is intensified and modulated simultaneously.

2. An electro-optic modulator as claimed in claim 1 further characterised in that said modulating means comprises a plurality of electrodes (34, 35) transverse and adjacent to said transmission path (31) such that the optical signal is modulated in response to an input electrical voltage signal.

3. An electro-optic modulator as claimed in claim 2 further characterised in that said optical resonator is a Fabry-Perot resonator comprising a pair of semi-transparent mirrors (32, 33) and a substrate (30) enclosing a resonant cavity (31), and said electrodes (34, 35) are positioned either side of said resonant cavity (31).

4. An electro-optic modulator as claimed in claim 3 further characterised in that a further semi-transparent mirror is provided, said further mirror providing a second independant resonant cavity in the substrate, said second cavity being enclosed by said further mirror and one of said pair of mirrors.

5. An electro-optic modulator as claimed in claim 3 further characterised in that a further pair of modulator electrodes (28, 29) is positioned with one electrode on each side of said second resonant cavity so as to permit additional modulation of an input optical signal.

6. An electro-optic modulator as claimed in any one of claims 2 to 5 further characterised in that a plurality of pairs of electrodes are located within the confines of said pair of mirrors to effect modulation of higher orders of resonance of the resonant cavity.

7. An electro-optic modulator as claimed in any one of claims 3 to 6 further characterised in that electro-optic coupling is provided such that a plurality of differently polarised optical signals (E1, E2) may be coupled to provide a single side-band modulated output.

8. An electro-optic modulator as claimed in claim 1 further characterised in that said resonator comprises a loop resonator (30) and said modulating means is an electrically conducting loop (32) which encircles the optical path, in use said electrically conducting loop (32) acting as a current loop.

9. An electro-optic modulator as claimed in claim 8 further characterised in that a plurality of electrically conducting loops, surround said optical path to permit application of a plurality of modulating electric signals.

0140578

1/6

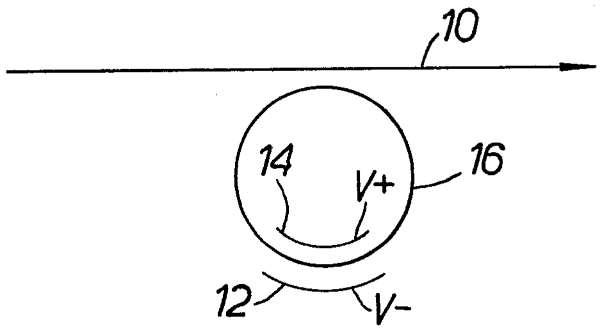


FIG.1.

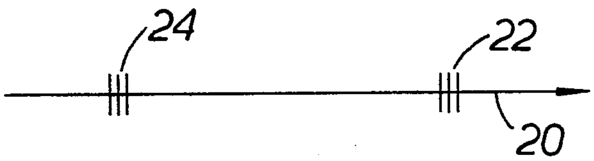


FIG.2.

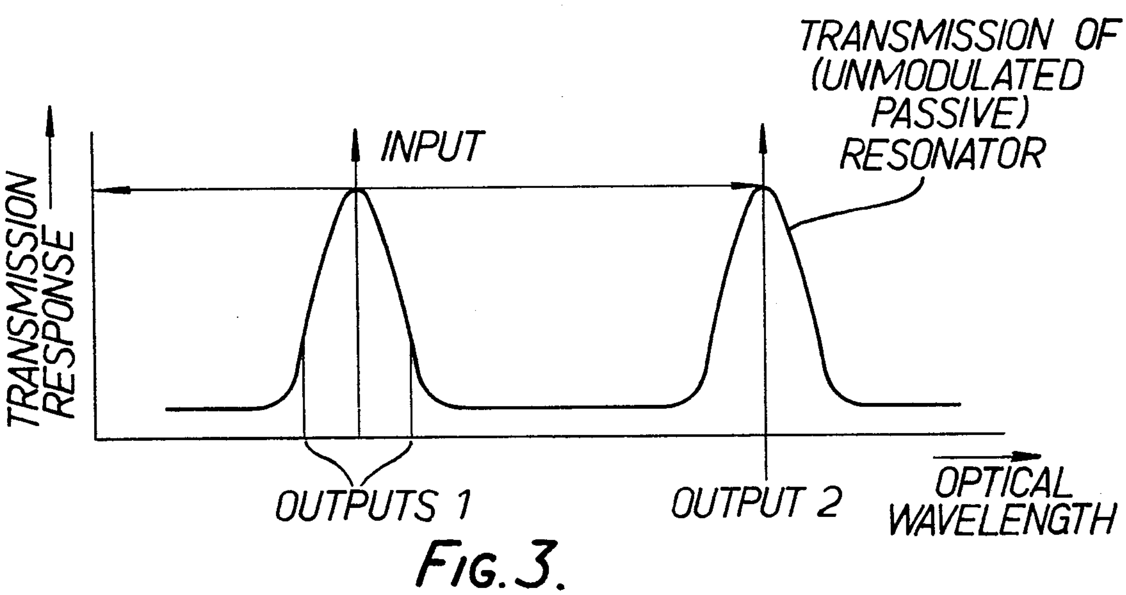


FIG.3.

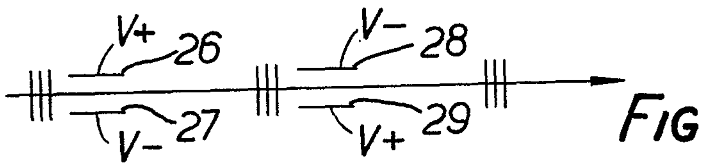


FIG. 4.

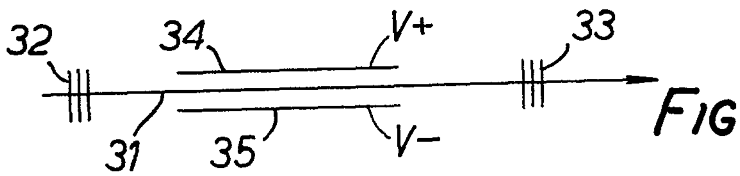


FIG. 5.

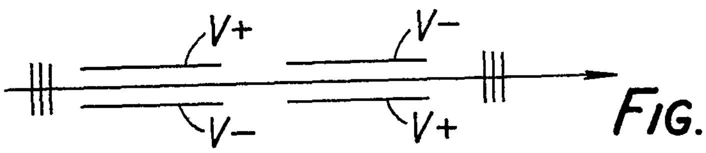


FIG. 6.

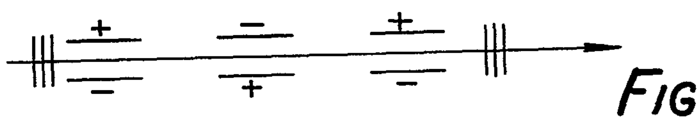


FIG. 7.

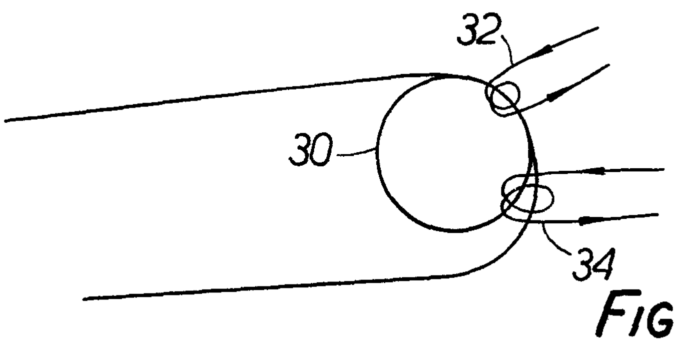


FIG. 8.

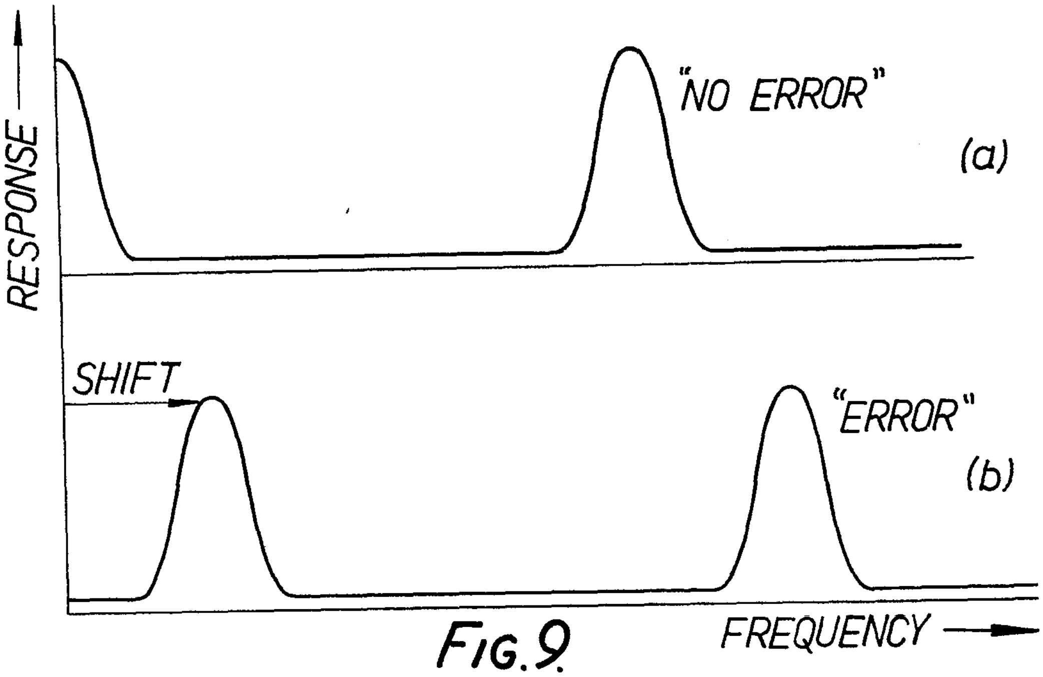


FIG.9.

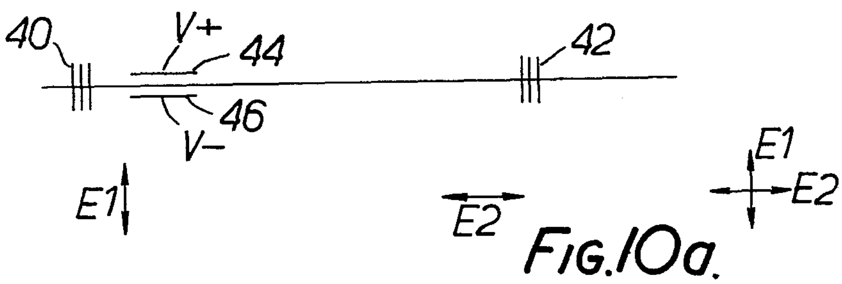


FIG.10a.

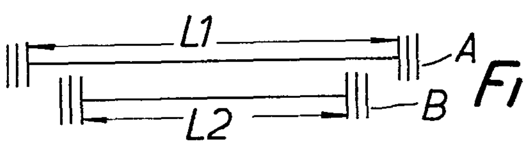


FIG.10b.

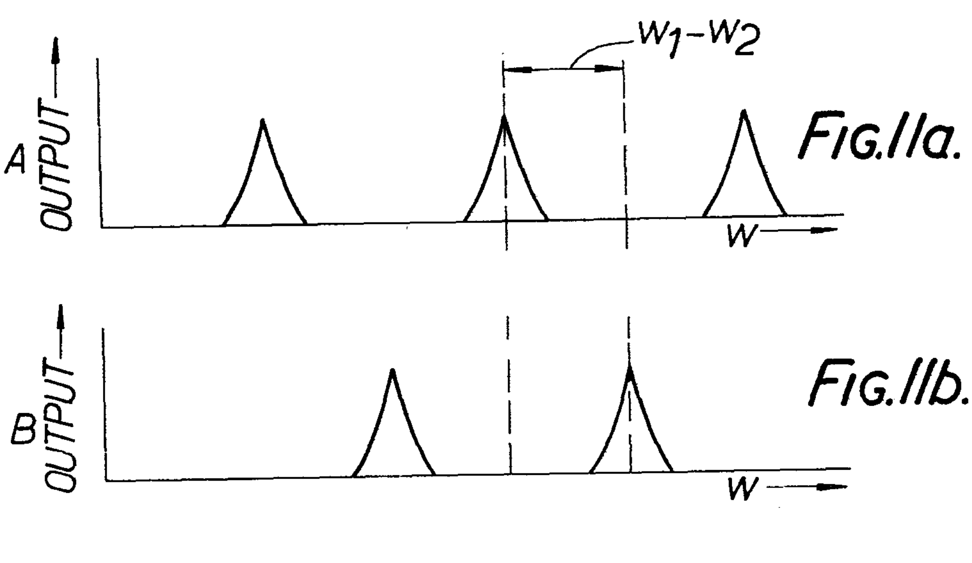


FIG.11a.

FIG.11b.

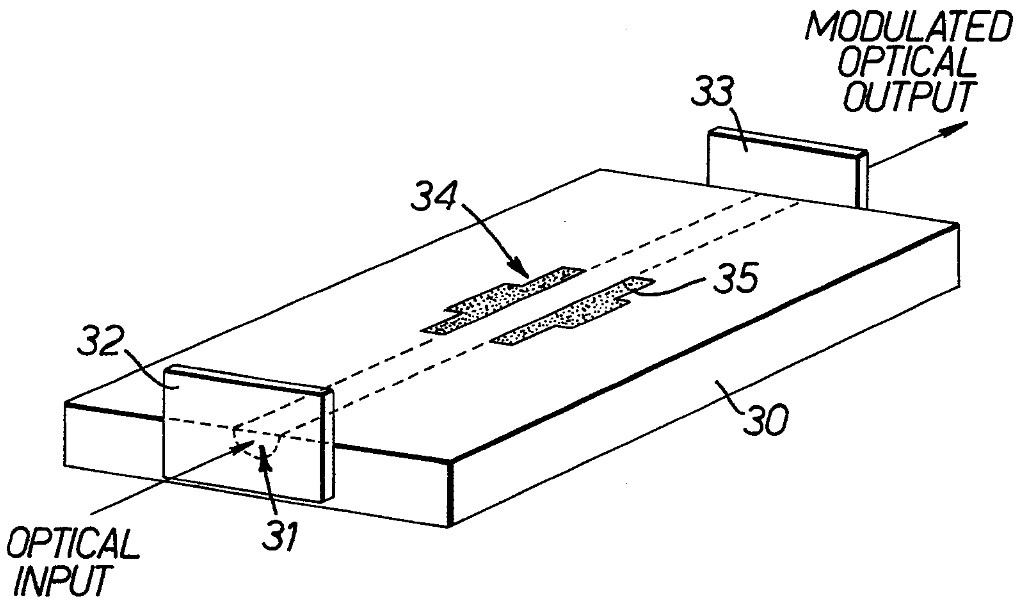
MODULATED
OPTICAL
OUTPUT
33
34
35
32
30
OPTICAL
INPUT
31

FIG. 12.

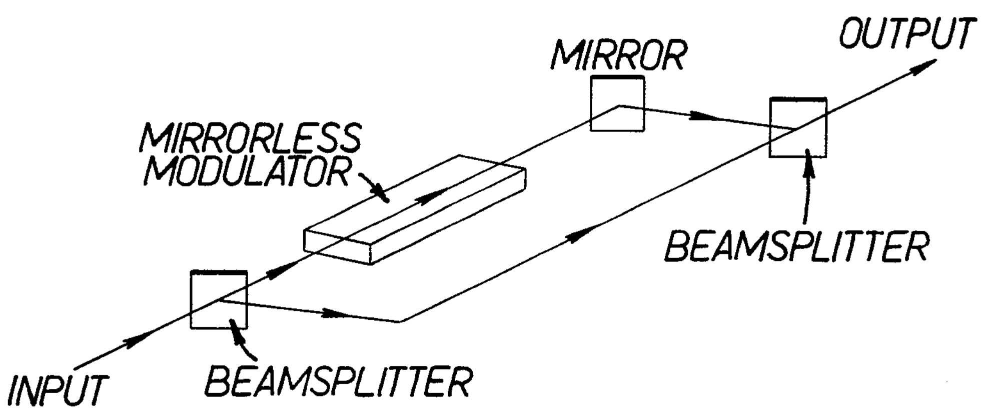
OUTPUT
MIRROR
MIRRORLESS
MODULATOR
BEAMSPLITTER
INPUT
BEAMSPLITTER

FIG. 13.

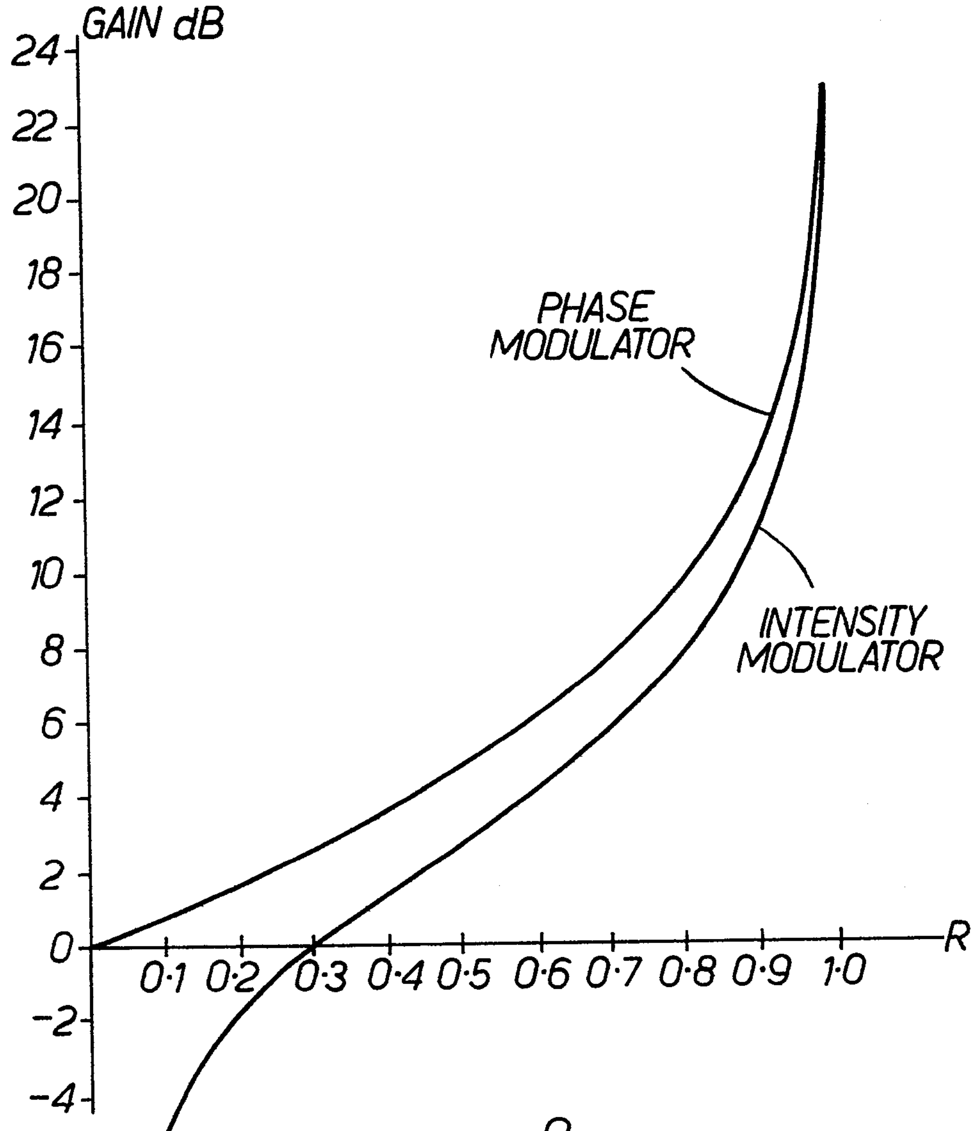

GAIN dB
24
22
20
18
16
14
12
10
8
6
4
2
0
-2
-4
R
0·1 0·2 0·3 0·4 0·5 0·6 0·7 0·8 0·9 1·0
PHASE MODULATOR
INTENSITY MODULATOR


FIG.14.

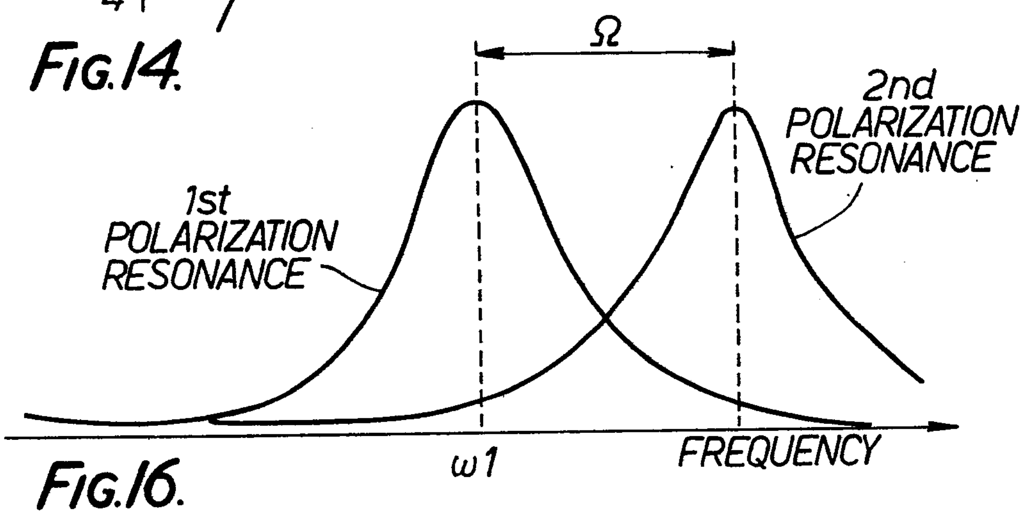

Ω
1st POLARIZATION RESONANCE
2nd POLARIZATION RESONANCE
ω1
FREQUENCY


FIG.16.

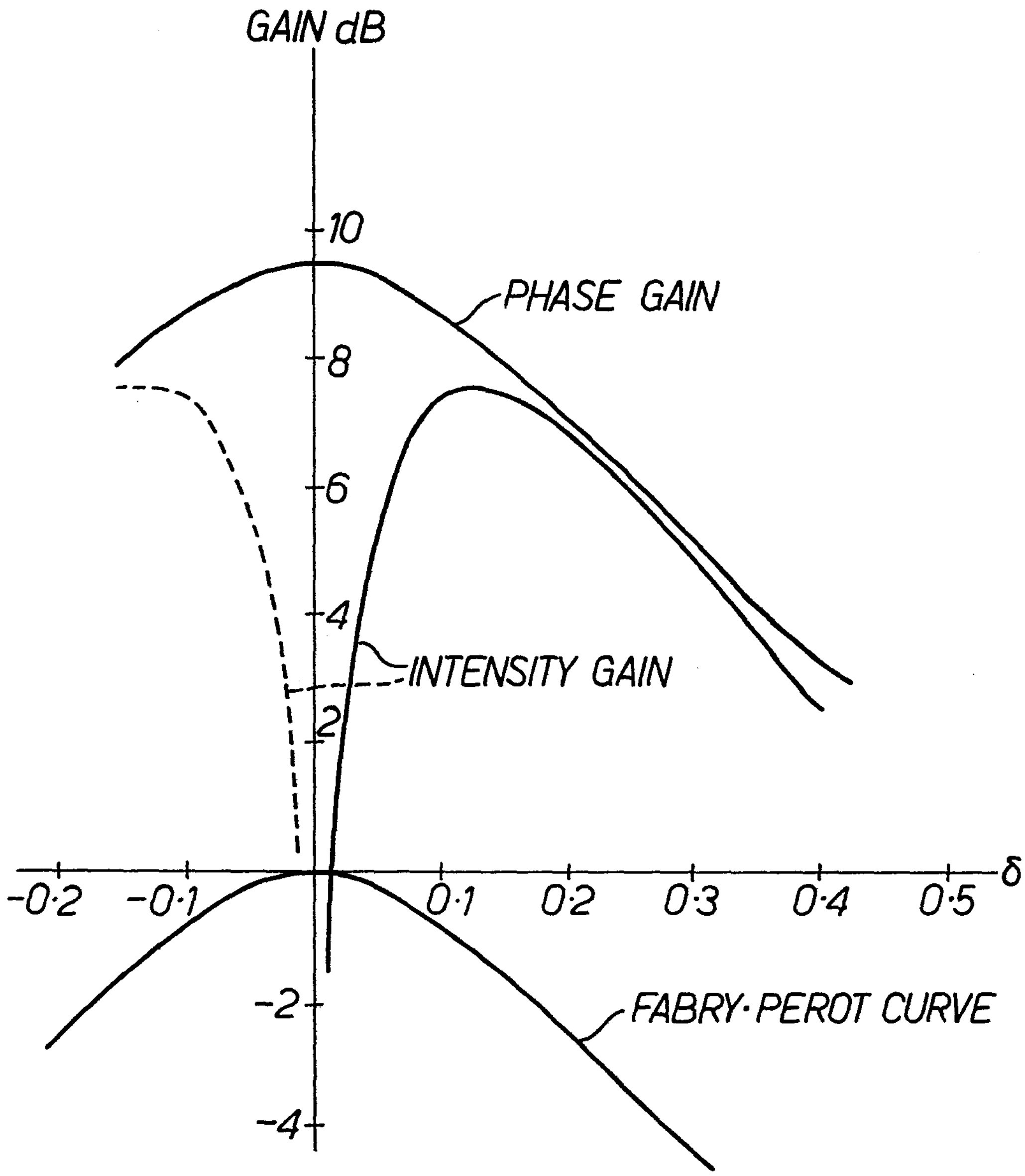
GAIN dB
10
8
6
4
2
-2
-4
-0·2
-0·1
0·1
0·2
0·3
0·4
0·5
δ
PHASE GAIN
INTENSITY GAIN
FABRY·PEROT CURVE

FIG. 15.

European Patent Office

# EUROPEAN SEARCH REPORT

0140578

Application number

EP 84 30 6534

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 198 115 (I.P. KAMINOV) * Column 1, lines 11-32; column 2, lines 12-44; column 5, line 55 - column 6, line 15; figures 1,3,4 * --- | 1-3 | G 02 F 1/21<br>G 02 F 1/01 |
| X | FR-A-2 365 900 (HUGHES AIRCRAFT) * Page 1, lines 1-21; page 4, line 1 - page 5, line 16; figures 1,2 * | 1 | |
| A | | 2 | |
| | --- | | |
| A | FR-A-2 226 678 (G. MARIE) * Page 1, lines 1-28; page 2, lines 6-25; page 3; figures 1-3 * --- | 1 | TECHNICAL FIELDS SEARCHED (Int. Cl.4) |
| A | US-A-3 549 236 (J.W. MINK) * Column 1, line 37 - column 3, line 58; figures 1,5 * --- | 1-3,7 | G 02 F |
| A | US-A-3 558 213 (E.A.J. MARCATILI) * Column 4, lines 15-37; column 9, line 29 - column 10, line 3; figures * --- -/- | 1 | |

The present search report has been drawn up for all claims

| Place of search | Date of completion of the search | Examiner |
|---|---|---|
| THE HAGUE | 28-12-1984 | BORMS F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

# EUROPEAN SEARCH REPORT

0140578

Application number

EP 84 30 6534

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| A | APPLIED OPTICS, vol. 21, no. 17, 1st September 1982, pages 3129-3131, New York, USA; W. GUNNING: "Double-cavity electroopitc Fabry-Perot tunable filter" * Figure 2 * --- | 1,4 | |
| A | US-A-3 748 246 (J.E. GOELL) * Figure 3 * --- | 1 | |
| A | US-A-3 589 794 (E.A.J. MARCATILI) ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 28-12-1984 | BORMS F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82